# EUROPÄISCHE PATENTSCHRIFT

(11) **EP 2 712 754 B1**
(45) Veröffentlichungstag und Bekanntmachung des Hinweises auf die Patenterteilung: **15.08.2018**
(21) Anmeldenummer: 13184517.4
(22) Anmeldetag: 16.09.2013
(51) Int. Cl.: A01D 41/127, B60K 28/06

(54) **Verfahren zum Betreiben einer landwirtschaftlichen Arbeitsmaschine**
Method for operating an agricultural working machine
Procédé de fonctionnement d'une machine de travail agricole

(30) Priorität: 27.09.2012 DE 102012109163; 22.11.2012 DE 102012111253
(43) Veröffentlichungstag der Anmeldung: 02.04.2014
(73) Patentinhaber: CLAAS Selbstfahrende Erntemaschinen GmbH, 33428 Harsewinkel (DE)
(72) Erfinder: Baumgarten, Joachim, 48361 Beelen (DE); Neu, Sebastian, 49196 Bad Laer (DE); Wilken, Andreas, 49143 Bissendorf (DE); Heitmann, Christoph, 48231 Warendorf (DE)

(56) Entgegenhaltungen:
- DE-A1- 3 803 916
- DE-A1- 10 126 224
- DE-A1- 10 152 852
- DE-A1-102004 047 136
- DE-A1-102009 016 936
- US-B1- 6 927 694

## Beschreibung

Die vorliegende Erfindung betrifft ein Verfahren zum Betreiben einer eine Vielzahl von Arbeitsaggregaten aufweisenden landwirtschaftlichen Arbeitsmaschine gemäß dem Oberbegriff des Anspruches 1. Weiterhin betrifft die Erfindung eine landwirtschaftliche Arbeitsmaschine gemäß dem Oberbegriff des Anspruches 13. Der Betrieb einer landwirtschaftlichen Arbeitsmaschine wird in der Regel durch eine Bedienperson beaufsichtigt und parametrisiert. Dies erfolgt durch ein Zusammenwirken mit einer Steuer- und Regelungseinrichtung, die eine Anzeigeeinheit sowie Mittel zur Dateneingabe umfasst und zur Steuerung und/oder Regelung von Arbeitsaggregaten der landwirtschaftlichen Arbeitsmaschine dient. Der Bedienperson kommt hierbei neben dem Führen der Arbeitsmaschine die Aufgabe zu, Einstellungen der Arbeitsaggregate vorzunehmen, zu überwachen und zu korrigieren beziehungsweise bei einer Verwendung von so genannten Fahrerassistenzsystemen zur Regelung der landwirtschaftlichen Arbeitsmaschine den Arbeitsprozess zumindest zu überwachen. Die Bedienperson muss bei einem Auftreten einer kritischen Situation oder einer Gefahrensituation, auf entsprechende Meldungen der Steuer- und Regelungseinrichtung reagieren, die von dieser akustisch und/oder optisch aufgezeigt werden. Die Art und Weise, wie auf solche Meldungen reagiert wird, hängt neben der Qualifikation der Bedienperson, der Ergonomie des Bedienumfeldes auf der Arbeitsmaschine auch von der jeweiligen Motivation beziehungsweise dem emotionalen Gemütszustand der Bedienperson ab.

Aufgabe der vorliegenden Erfindung ist es, ein Verfahren zum Betreiben einer landwirtschaftlichen Arbeitsmaschine bereitzustellen, welches dazu beiträgt, Fehlbedienungen der Arbeitsmaschine durch eine Bedienperson zu reduzieren und daraus resultierende Effizienzeinbußen zu minimieren.

Diese Aufgabe wird erfindungsgemäß durch den kennzeichnenden Teile des unabhängigen Anspruches 1 gelöst.

Vorteilhafte Weiterbildungen sind den auf den unabhängigen Anspruch 1 rückbezogenen Unteransprüchen zu entnehmen.

Gemäß dem unabhängigen Anspruch 1 wird vorgeschlagen, dass der emotionale Zustand einer Bedienperson während einer Interaktion über die zumindest eine Schnittstelle mit der Arbeitsmaschine erkannt wird, und dass die Betriebsweise der Arbeitsmaschine an den emotionalen Zustand der Bedienperson angepasst wird. Hierdurch wird erreicht, dass der wirtschaftliche Erfolg des Einsatzes der landwirtschaftlichen Arbeitsmaschine, der maßgeblich von der Art und Weise der Handhabung der Arbeitsmaschine durch die Bedienperson abhängig ist, welche wiederum durch den emotionalen Zustand der Bedienperson geprägt ist, verbessert wird, indem sich die Arbeitsmaschine in ihrem Prozessverhalten und ihrer Kommunikation mit der Bedienperson auf deren emotionalen Zustand einstellt. Darüber hinaus kann eine positive Bindung der Bedienperson an die Arbeitsmaschine erreicht werden, da sich die Arbeitsmaschine auf die Bedienperson einstellen kann. Die Bedienperson wird stärker in die Prozesse der Arbeitsmaschine eingebunden, um das Verständnis für die Prozessabläufe zu erhöhen.

Insbesondere kann der emotionale Zustand einer Bedienperson, der erkannt wird, ein Komplex an Eigenschaften sein, durch welche die Kommunikation der Bedienperson mit der Schnittstelle zu der Arbeitsmaschine beeinflusst wird. Dieser Komplex umfasst emotionale Zustände wie ein aggressives oder forsches Verhalten, unsicheres und/oder nervöses Verhalten, Unzufriedenheit oder Langeweile, Übermüdung oder Überlastung, Zufriedenheit und motiviertes Verhalten der Bedienperson. Es wird eine Interaktion einer Bedienperson mit der Steuer- und Regelungseinrichtung durch diese ausgewertet werden, um auf den emotionalen Zustand einer Bedienperson rückzuschließen, und in Abhängigkeit von dem Ergebnis der Auswertung ein Betriebsmodus aus einer Auswahl von zumindest zwei Betriebsmodi der Steuer- und Regelungseinrichtung aktiviert werden. Die Auswertung zumindest einer Interaktion, vorzugsweise mehrerer Interaktionen, erfolgt durch einen Vergleich mit einen emotionalen Zustand der Bedienperson charakterisierenden Daten, die in der Steuer- und Regelungseinrichtung hinterlegt sind, um zu entscheiden, welcher Betriebsmodus für die Bedienperson gegenwärtig am geeignetsten erscheint.

Durch die gezielte Auswahl eines Bedienmodus der Steuer- und Regelungseinrichtung als Reaktion auf einen aktuell vorherrschenden emotionalen Zustand der Bedienperson passen sich die Kommunikation sowie das Handling der Steuer- und Regelungseinrichtung an diesen an, um die Gefahr einer Fehlbedienung beziehungsweise eine ineffiziente Arbeitsweise der landwirtschaftlichen Arbeitsmaschine, beispielsweise in Folge einer unaufmerksameren Handhabung, zu reduzieren. Die Auswahl eines an den vorherrschenden emotionalen Zustand der Bedienperson angepassten Betriebsmodus der Steuer- und Regelungseinrichtung unterliegt über einen längeren Zeitraum gesehen Schwankungen, die sich auf die Arbeitsweise und Effizienz der Arbeitsmaschine auswirken. Um diese Auswirkungen zu kompensieren, wird wiederkehrend eine Überprüfung und Auswertung einer Interaktion durchgeführt. Die gezielte Auswahl des Betriebsmodus durch die Steuer- und Regelungseinrichtung ermöglicht es, den Betrieb der Arbeitsmaschine unabhängiger von der sich aus dem jeweiligen emotionalen Zustand ergebenden Art und Weise der Handhabung von und der Kommunikation mit der landwirtschaftlichen Arbeitsmaschine zu machen, das heißt, auch wenn der Betrieb der Arbeitsmaschine nicht im Bereich des wirtschaftlichen Optimums erfolgt, können nachteilige Begleiterscheinungen in Folge von emotionalen Zuständen wie beispielsweise Unsicherheit, Überforderung oder Langeweile abgemildert oder vermieden werden. Mitunter lässt sich auf Grund der Anpassung der Kommunikation sowie des Betriebsverhaltens der Arbeitsmaschine eine positive Beeinflussung des emotionalen Zustandes der Bedienperson erreichen.

Vorzugsweise kann bei einer Interaktion mit der Steuerungsvorrichtung über die Mittel zur Dateneingabe deren Handhabung detektiert werden. Die Art und Weise wie die Bedienperson physisch auf die Mittel zur Dateneingabe einwirkt wird ausgewertet, um auf den emotionalen Zustand rückzuschließen und daraufhin einen entsprechenden Betriebsmodus zu aktivieren. Diese Art der Erfassung von Daten zur Beurteilung des emotionalen Zustandes einer Bedienperson hat den Vorteil, dass sie relativ objektiv ist, da die Art der Handhabung unterbewusst gesteuert wird.

Hierbei kann zur Erkennung der Handhabung die mechanische Einwirkung auf die Mittel zur Dateneingabe detektiert werden. Hierzu kann der auf die Mittel zur Dateneingabe ausgeübte Druck, beispielsweise bei Tasten, gemessen werden. Ebenfalls kann die Beschleunigung gemessen werden, mit der eine Taste betätigt wird. Die Verwendung von Bedienhebeln mit daran angeordneten Tasten als Mittel zur Dateneingabe, so genannte Multifunktionshebel, lassen sich in gleicher Weise hinsichtlich ihrer Handhabung durch eine Bedienperson auswerten.

Insbesondere kann zur Erkennung der Handhabung eine Leitwertmessung an den Mitteln zur Dateneingabe durchgeführt werden. Hierbei soll die Feuchtigkeit der Fingerspitze mit der eine Taste betätigt wird oder der Handfläche, mit der ein Schaltelement betätigt wird, erfasst werden, welche ein Indiz für einen unsicheren oder nervösen emotionalen Zustand der Bedienperson sein kann.

Des Weiteren können physische Daten der Bedienperson, wie die Pulsfrequenz, der Blutdruck, die Augenbewegung oder die Handtemperatur erfasst und ausgewertet werden, um den jeweiligen emotionalen Zustand besser einschätzen zu können.

Weiterhin kann zur Erkennung der Handhabung die Reaktionszeit auf eine Eingabeaufforderung erfasst werden. Auf Grund der Erfassung der Reaktionszeit, mit der auf eine Eingabeaufforderung durch eine Bedienperson reagiert wird, lässt sich den Aufmerksamkeitsgrad der Bedienperson schließen, der charakteristisch für einen emotionalen Zustand der Bedienperson sein kann. Hieran können sich Betriebsmodi orientieren, die entsprechend einer schnellen, einer normalen oder einer langsamen Reaktion auf eine Eingabeaufforderung Ausgaben auf der Anzeigeeinheit zu einem früheren Zeitpunkt einblenden als standardmäßig vorgesehen, um der Bedienperson hinreichend Zeit für eine qualifizierte Entscheidung zu geben. Beispielsweise kann somit das Überraschungsmoment bei einem Warnhinweis kompensiert werden.

Ebenso kann zur Erkennung der Handhabung die Betätigungsdauer der Mittel zur Dateneingabe erfasst werden.

Ergänzend oder alternativ kann zur Erkennung der Handhabung die Wiederholfrequenz einer Betätigung der Mittel zur Dateneingabe erfasst werden.

Gemäß einer bevorzugten Ausführungsform kann vorgesehen sein, dass eine gezielte Ansprache der Bedienperson hinsichtlich ihres emotionalen Zustandes durch die Steuer- und Regelungseinrichtung durchgeführt wird. Hierzu kann vorgesehen sein, durch mehrere vorformulierte Fragen, so genannte Suggestivfragen, auf die mit einer begrenzten Auswahl an Antworten geantwortet werden kann, die Rückschlüsse auf den emotionalen Zustand der Bedienperson erlauben. Alternativ ist auch eine direkte Frage nach der Einschätzung des emotionalen Zustandes der Bedienperson vorsehbar, die dieser entsprechend aus einer Auswahl möglicher Antworten auswählen kann. Die gezielte Ansprache kann alleine zur Anwendung kommen, um auf den emotionalen Zustand der Bedienperson rückzuschließen oder in Kombination mit einem oder mehreren der vorstehend beschriebenen Verfahrensschritten.

Vorteilhafterweise kann das Verfahren bei jeder Inbetriebnahme der Arbeitsmaschine durchgeführt werden. Auf diese Weise kann sichergestellt werden, dass die Steuerungsvorrichtung sowie die Arbeitsmaschine in einem Betriebsmodus betrieben werden, der am wirtschaftlichsten erscheint.

Insbesondere kann das Verfahren erstmalig nach einer vorgebbaren Betriebsdauer der Arbeitsmaschine durchgeführt werden.

Vorzugsweise kann das Verfahren in zeitlich vorgebbaren Intervallen sich wiederholend durchgeführt werden. Dies ist insofern sinnvoll, um auf Änderungen des emotionalen Zustandes der Bedienperson reagieren zu können, die im Verlauf eines Arbeitstages zwangsläufig auftreten.

Weiterhin betrifft die vorliegende Erfindung eine landwirtschaftliche Arbeitsmaschinegemäß dem Oberbegriff des unabhängigen Anspruches 13 zur Durchführung des erfindungsgemäßen Verfahrens.

Gemäß dem kennzeichnenden Teil des unabhängigen Anspruches 14 wird vorgeschlagen, dass die Steuer- und Regelungseinrichtung dazu eingerichtet ist, den emotionalen Zustand eines Bedieners in Bezug auf eine Kommunikation mit der Arbeitsmaschine zu erkennen, weiterhin dass die Steuer- und Regelungseinrichtung dazu eingerichtet ist, aus dem erkannten emotionalen Zustand die Handhabung der Arbeitsmaschine abzuleiten, und dass die Steuer- und Regelungseinrichtung dazu eingerichtet ist, die Art und Weise der Kommunikation der Arbeitsmaschine mit dem Bediener an diesen emotionalen Zustand anzupassen. Dabei ist die Steuer- und Regelungseinrichtung dazu eingerichtet, zumindest eine Interaktion einer Bedienperson mit der Steuer- und Regelungseinrichtung durch diese auszuwerten, um auf den emotionalen Zustand einer Bedienperson rückzuschließen, und in Abhängigkeit von der Auswertung einen Betriebsmodus aus einer Auswahl von zumindest zwei Betriebsmodi der Steuer- und Regelungseinrichtung zu aktivieren.

In bevorzugter Weiterbildung ist vorgesehen, dass die Steuer- und Regelungseinrichtung eine Auswerteeinheit umfasst, die mit zumindest einem Sensor verbunden ist, der zur Erfassung einer Messgröße eingerichtet ist, die auf ein Bedienverhaltens einer Bedienperson rückschließen lässt.

Hierzu kann die Steuer- und Regelungseinrichtung dazu eingerichtet sein, die von dem mindestens einen Sensor bereitgestellten Daten auszuwerten, und anhand dieser Auswertung zu entscheiden, welcher Betriebsmodus dem aktuell bestimmten Bedienverhalten entspricht.

Hierzu kann der Sensor zur Erfassung mechanischer Signale eingerichtet sein. Alternativ oder ergänzend kann der Sensor zur Erfassung elektrischer oder thermischer Signale eingerichtet sein. Als Beispiel für einen thermischen Sensor ist ein Heißleiter zu nennen, dessen elektrischer Widerstand sich temperaturabhängig verändert. Alternativ oder ergänzend kann die Steuer- und Regelungseinrichtung zur Erfassung, Dokumentation und Auswertung des Benutzerverhaltens eingerichtet sein. Vorteilhafterweise kann die Steuer- und Regelungseinrichtung dazu eingerichtet sein, die Auswertung in einstellbaren zeitlichen Intervallen durchzuführen.

Insbesondere kann die Steuer- und Regelungseinrichtung durch einen Eingriff der Bedienperson übersteuerbar sein, um die Erkennung abzuschalten.

Die vorliegende Erfindung wird anhand eines in den Zeichnungen dargestellten Ausführungsbeispieles näher erläutert.

Weiterführende Möglichkeiten zur Erkennung des emotionalen Zustandes einer Bedienperson können in der optischen Erfassung physischer Reaktionen der Bedienperson, beispielsweise der Mimik, der Frequenz des Augenliedschlages oder dergleichen durch eine Kamera, bestehen.

Es zeigen:
- Fig. 1: eine schematische Seitenansicht eines Mähdreschers;
- Fig. 2: eine schematische Darstellung einer Anzeigeeinheit;
- Fig. 3: eine perspektivische Ansicht eines Multifunktionsgriffes;
- Fig. 4: ein Flussdiagramm zur Veranschaulichung des Ablaufes zur Erfassung und Auswertung des Bedienverhaltens.

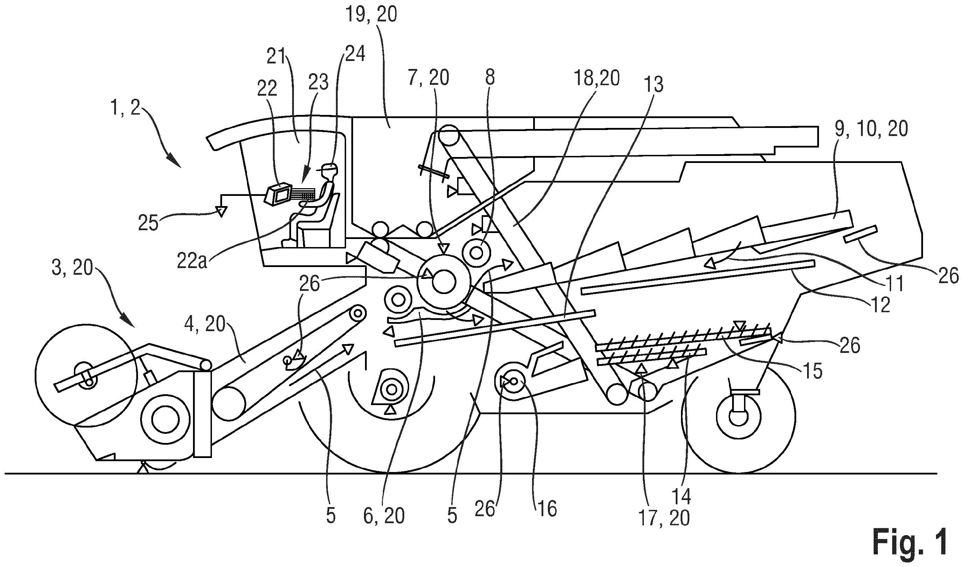

In Fig. 1 ist schematisch eine als Mähdrescher 2 ausgeführte landwirtschaftliche Arbeitsmaschine 1 dargestellt, die in ihrem frontseitigen Bereich ein Getreideschneidwerk 3 aufnimmt, welches in an sich bekannter Weise mit dem Schrägförderer 4 des Mähdreschers 2 verbunden ist. Der den Schrägförderer 4 durchlaufende Erntegutstrom 5 wird in dem obenseitigen, rückwärtigen Bereich des Schrägförderers 4 an die untenseitig zumindest teilweise von einem sogenannten Dreschkorb 6 ummantelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Gutstrom 5 so um, dass er unmittelbar an eine im dargestellten Ausführungsbeispiel als Hordenschüttler 9 ausgeführte Trenneinrichtung 10 übergeben wird. Es liegt im Rahmen der Erfindung, dass der Mähdrescher 2 an Stelle des Hordenschüttlers 9 über eine an sich bekannte und deshalb nicht dargestellte, als Trennrotor ausgeführte Trenneinrichtung 10 verfügt. Auf dem oszillierenden Hordenschüttler 9 wird der Gutstrom 5 so gefördert, dass in dem Gutstrom 5 enthaltene freibewegliche Körner 11 im untenseitigen Bereich des Hordenschüttlers 9 abgeschieden werden. Sowohl die am Dreschkorb 6 als auch am Hordenschüttler 9 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom wird schließlich mittels Elevatoren 18 an einen Korntank 19 übergeben. Im Folgenden werden das Getreideschneidwerk 3, der Schrägförderer 4, die Dreschorgane 7 und der ihnen zugeordnete Dreschkorb 6, die Trenneinrichtung 10, die Reinigungseinrichtung 17, die Elevatoren 18 und der Korntank 19 als Arbeitsorgane 20 der landwirtschaftlichen Arbeitsmaschine 1 bezeichnet.

Weiter verfügt die landwirtschaftliche Arbeitsmaschine 1 über eine Fahrzeugkabine 21 in der zumindest eine mit einer Anzeigeeinheit 22 und einer Eingabeeinheit 22a, die beispielsweise als Tastatur oder Touchscreen ausgeführt sein kann, versehene Steuer- und Regeleinrichtung 23 angeordnet ist, mittels derer automatisch oder von einer Bedienperson 24 der landwirtschaftlichen Arbeitsmaschine 1 initiiert eine Vielzahl von Prozessen gesteuert wird, die die Arbeitsweise der einzelnen Arbeitsorgane 20 beeinflussen. Die Eingabeeinheit 22a oder eine als Touchscreen ausgebildete Anzeigeeinheit 22 bilden Schnittstellen zur Kommunikation mit der Steuer- und Regeleinrichtung 23. Eine weitere Schnittstelle zur Kommunikation kann in Form eines Mikrofones und Lautsprechern ausgebildet sein, um Anweisung in mündlicher Form zu geben, sowie um der Bedienperson 24 Fragen, Informationen und Warnhinweise seitens der Steuer- und Regeleinrichtung 23 in akustischer Form zukommen zu lassen. Die Steuer- und Regeleinrichtung 23 kommuniziert über ein Bussystem 25 in an sich bekannter Weise mit einer Vielzahl von Sensorsystemen 26, die beispielsweise der Erfassung der Schichthöhe im Schrägförderer 4, der Dreschtrommeldrehzahl der Dreschorgane 7, der Gebläsedrehzahl des Gebläses 16 dienen, um nur einige sensorisch erfassbare Betriebsparameter zu nennen. Einzelheiten bezüglich der Struktur der Sensorsysteme 26 sind detailliert in der DE 101 47 733 A1 beschrieben, deren Inhalt hiermit vollumfänglich Bestandteil der Offenbarung dieser Patentanmeldung wird, sodass im Folgenden die Struktur der Sensorsysteme 26 nicht nochmals beschrieben wird.

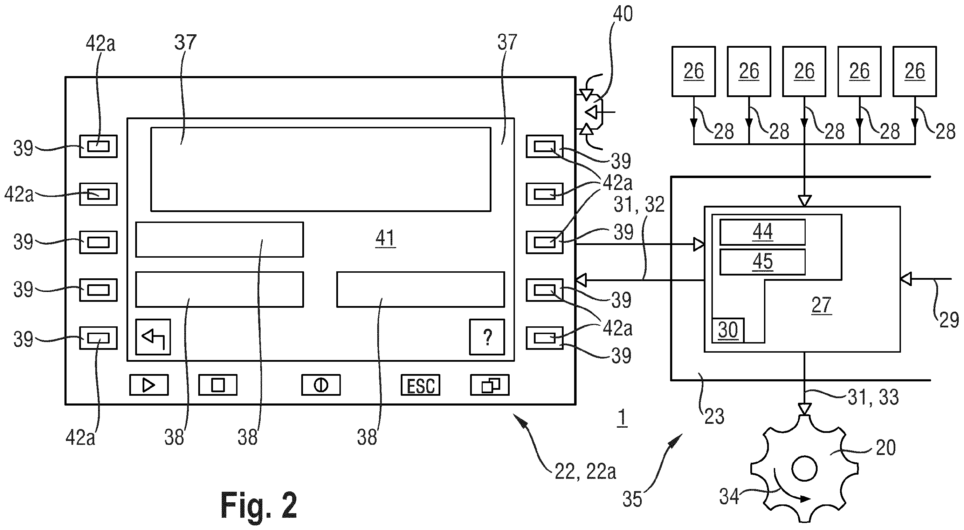

Fig. 2 zeigt eine schematische Darstellung der Anzeigeeinheit 22 und der Eingabeeinheit 22a, die vorliegend als Tasten 39 ausgeführt sind, die in einen den Bildschirm der Anzeigeeinheit 22 umgebenden Rahmen angeordnet sind, sowie die der Steuer- und Regeleinrichtung 23 zugeordnete und mit der Anzeigeeinheit 22 gekoppelte Recheneinheit 27. Die Recheneinheit 27 ist so beschaffen, dass sie neben den von den Sensorsystemen 26 generierten Informationen 28, externe Informationen 29 und in der Recheneinheit 27 selbst hinterlegte Informationen 30, wie etwa Expertenwissen, zu einer Vielzahl von Ausgangssignalen 31 verarbeiten kann. Die Ausgangssignale 31 sind dabei so beschaffen, dass sie zumindest Anzeigesteuersignale 32 und Arbeitsorgansteuersignale 33 umfassen, wobei erstere die Inhalte der Anzeigeeinheit 22 bestimmen und letztere die Änderung von unterschiedlichen Arbeitsparametern 34 der Arbeitsorgane 20 der landwirtschaftlichen Arbeitsmaschine 1 bewirken, wobei Pfeil 34 symbolisch für den Arbeitsparameter Dreschtrommeldrehzahl steht. Die Steuer- und Regeleinrichtung 23 mit der ihr zugeordneten Anzeigeeinheit 22 und der Recheneinheit 27 sind Bestandteil des erfindungsgemäßen Fahrerassistenzsystems 35, dessen Anzeigeeinheit 22 in einem Anzeigebereich 36 eine interaktive, natürlichsprachliche Kommunikation zwischen der Bedienperson 24 und dem Fahrerassistenzsystem 35 zulässt.

Der Anzeigebereich 36 der Anzeigeeinrichtung 22 umfasst neben einem oder mehreren Hinweisfeldern 37 Auswahlfelder 38 zur Aktivierung verschiedener Prozessabläufe. Die Aktivierung des jeweiligen Auswahlfeldes 38 erfolgt entweder unmittelbar über dem jeweiligen Auswahlfeld 38 zugeordnete Tasten 39 und/oder einen zentralen Navigationsknopf 40, der durch Drehen und Drücken ein Navigieren zwischen den verschiedenen Auswahlfeldern 38 ermöglicht und/oder durch unmittelbare Berührung des jeweiligen Auswahlfeldes 38 durch die Bedienperson 24, sofern der Anzeigebereich 36 als Touchscreen-Monitor 41 ausgeführt ist. Nach Aktivierung eines Auswahlfeldes 38 wird schließlich ein in der Recheneinheit 27 der Steuer- und Regeleinrichtung 23 hinterlegter Softwaremodul 44 aktiviert, der unter Einbeziehung der in der Recheneinheit 27 hinterlegten Informationen 30, sowie der verfügbaren externen und internen Informationen 28, 29 eine Optimierung der Arbeitsparameter 34 der Arbeitsorgane 20 bewirkt.

Unterhalb der Tasten 39 sind Drucksensoren 42 und /oder Beschleunigungssensoren 42a und/oder Feuchtesensoren 42b angeordnet, die der Detektion des von der Bedienperson 24 bei der Betätigung der Taste 39 ausgeübten Druckes beziehungsweise der auf die Taste einwirkenden Beschleunigung oder der Erfassung der Feuchtigkeit bei der Betätigung dienen. Das zumindest eine von dem jeweiligen Drucksensor 42 und/oder dem Beschleunigungssensor 42a und/oder dem Feuchtesensor 42b bereitgestellte Signal wird als Eingangssignale 43 der Recheneinheit 27 zugeführt. Bei der Betätigung der Tasten 39 wird zudem die Zeitdauer erfasst, über welche die Bedienperson 24 die Taste 39 gedrückt hält. Darüber hinaus wird die Zeitdauer erfasst, die zwischen dem Auftreten einer Meldung auf der Anzeigeeinheit 22 und der Reaktion auf diese Meldung durch den Bedienperson 24 verstreicht. Des Weiteren wird die Wiederholfrequenz der Betätigung der gleichen Taste 39 bei einer Eingabe erfasst. Sowohl ein die Zeitdauer als auch ein die Wiederholfrequenz repräsentierendes Signal werden der Recheneinheit 27 als Eingangssignale 43 zur Verfügung gestellt.

Die der Recheneinheit 27 zugeführten Eingangssignale 43 werden von einem Softwaremodul 45 verarbeitet, um auf Basis der Eingangssignale 43 auf den emotionalen Zustand, das heißt die aktuelle Grundgemütsverfassung der Bedienperson 24 rückschließen zu können. Hierzu sind für verschiedene emotionale Zustände oder Grundgemütsverfassungen charakteristische Standardwertbereiche für die beispielhaft aufgelisteten ,sensorisch erfassbaren Größen Druck, Beschleunigung, Feuchtigkeit, Temperatur, Zeit oder Wiederholfrequenz und dergleichen mehr in der Steuer- und Regeleinrichtung 23 hinterlegt, die zum Vergleich und zur Auswertung der detektierten Istwerte herangezogen werden. Anhand des Vergleiches wird auf eine aktuelle Grundgemütsverfassung der Bedienperson 24 geschlossen. Als Reaktion auf die durch den Vergleich der Istwerte mit den Standardwertbereichen bestimmte Grundgemütsverfassung wird die Steuer- und Regeleinrichtung 23 in einem Betriebsmodus betrieben, der am geeignetsten erscheint, der festgestellten Grundgemütsverfassung der Bedienperson 24 gerecht zu werden oder diese zu verbessern. Die für die erfassbaren Messgrößen definierbaren Standardwertebereiche ermöglichen eine breitere Fächerung bei der Abstufung zur Differenzierung beispielsweise eines starken, eines normalen oder eines schwachen Tastendruckes. Entsprechendes gilt auch für die erfassbaren Größen Beschleunigung, Feuchtigkeit, Temperatur, Zeit oder Wiederholfrequenz.

In den unterschiedlichen Betriebsmodi, mit denen die Steuer- und Regeleinrichtung 23 betreibbar ist, werden jeweils zumindest teilweise voneinander abweichende Einstellungen hinsichtlich der Kommunikation mit der Bedienperson 24 eingestellt. So wird beispielsweise die Kommunikation einer Bedienperson 24, deren emotionaler Zustand als eher motiviert angesehen werden kann, stärker an diesen angepasst, indem die Anzeige auf der Anzeigeeinheit 22 ausführlicher gestaltet wird, das heißt, dass mehr relevante Betriebsparameter zur Anzeige kommen, der Bildschirm eine hohe Informationsdichte aufweist. Im Fall einer eher unsicher agierenden Bedienperson wird die Darstellung auf der Anzeigeeinheit auf das Wesentlichen reduziert. Ein aggressiv oder herausfordernd wirkender Gemütszustand der Bedienperson 24 kann ebenfalls zu einer Reduzierung der Anzeige von Betriebsparametern auf das Wesentliche führen, wobei hier zusätzlich die Art der Darstellung, beispielsweise über Hintergrundfarben oder dergleichen mehr auf die Gestaltung der Darstellung Einfluss genommen wird, um eine möglichst beruhigende Wirkung zu erzielen. Darüber hinaus kann gemäß dem Betriebsmodus, der in Abhängigkeit von der detektierten Grundgemütsverfassung eingestellt wird, die Reaktionsweise der Arbeitsmaschine 1 auf Änderungen von Einstellparametern der Arbeitsorgane 20 verändert werden, wie nachstehend erläutert wird.

Beispielsweise wird in Folge eines wiederholten kräftigen Tastendrucks eine Grundgemütsverfassung detektiert, welche einem herausfordernden Verhalten der Bedienperson 24 entspricht. Die hiermit korrespondierende Betriebsart der Steuer- und Regeleinrichtung 23 sieht beispielsweise eine Einschränkung des Umfanges der angezeigten Informationen vor, das heißt es wird sich auf das Wesentliche beschränkt. So werden nur die Informationen dargestellt, die auf eine bevorstehende kritische Situation, in der sich die Arbeitsmaschine 1 beziehungsweise einzelne Arbeitsaggregate 20 während des Ernteprozesses befinden, hinweisen. Entsprechend ließe sich der Zeitpunkt einer Warnmeldung gegenüber dem konventionellen Betriebsmodus nach hinten verschieben, wodurch dann ein schnelleres Handeln der Bedienperson 24 erforderlich würde. Die Kommunikation der Steuer- und Regeleinrichtung mit der Bedienperson 24 durch Rückfragen wird reduziert, um diesen zu entlasten. Seitens der Arbeitsmaschine 1 sind als gemäß dem ausgewählten Betriebsmodus vorgesehene Reaktionen das Verändern von Einstellparametern in größeren Intervallen sowie kürzere Wartezeiten bei der Abfrage der Wirksamkeit einer veränderten Einstellung durch die Steuer- und Regeleinrichtung 23.

Eine Bedienperson 24, die mit geringem Nachdruck zeitverzögert die Tasten 39 betätigt, und bei der erhöhte Feuchtewerte durch den Feuchtesensor 42b erfasst werden, lässt auf eine Grundgemütsverfassung schließen, die auf ein unsicheres Verhalten der Bedienperson 24 hinweist. Demgemäß wird von der Steuer- und Regeleinrichtung ein Betriebsmodus eingestellt, durch den die Bedienperson 24 stärker angeleitet wird, wenn durch eine Veränderung einer oder mehrerer Einstellungen der Arbeitsaggregate 20 das Betriebsverhalten der Arbeitsmaschine 1 optimiert werden soll. Hierzu werden der Bedienperson 24 in diesem Betriebsmodus mehr Informationen über die Auswirkungen der vorgeschlagenen Einstellungen der Arbeitsaggregate zur Kenntnis gebracht, wodurch der Vorgang der Optimierung für die Bedienperson 24 transparenter wird. Insbesondere wird auf eine feinabgestufte Optimierung eines oder mehrerer Arbeitsaggregate 20 zumindest temporär verzichtet. Darüber hinaus kann in diesem Fall vorgesehen sein, dass die Arbeitsmaschine Handlungen automatisch vornimmt, um Gefahrensituationen entgegenzuwirken, die ein schnelles, reaktionssicheres handeln erfordern würden, ohne die Reaktion der Bedienperson 24 abzuwarten. So kann bei einem drohenden Gutstau in dem Vorsatzgerät 3 oder der Arbeitsmaschine 1 automatisch eine Gegenmaßnahme eingeleitet werden, während parallel entsprechende Hinweise auf die Gefahrensituation der Bedienperson 24 signalisiert werden, auf die diese reagieren muss. Auf diese Weise lassen sich weitergehende negative Auswirkungen einer Gefahrensituation auf Grund einer zeitverzögerten Reaktion durch die in ihrem Verhalten als unsicher eingestufter Bedienperson 24 vermeiden.

Das Vorliegen einer Grundgemütsverfassung, die auf eine unzufriedene oder sich langweilende Bedienperson 24 schließen lässt, wird dadurch detektiert, dass die Bedienperson 24 auf Anforderungen durch das Steuer- und Regeleinrichtung 23 nicht oder nur verspätet reagiert, was durch die Steuer- und Regeleinrichtung 23 erfasst wird. Ein weiteres Indiz für diese Grundgemütsverfassung ist der Auslastungsgrad der Arbeitsmaschine, welcher sich beispielsweise aus der Erfassung des Erntegutdurchsatzes ableiten lässt. Aber auch die Häufigkeit mit der die Bedienperson 24 ein Hilfemenü der Steuer- und Regeleinrichtung 23 oder des Fahrerassistenzsystems 35 aufruft sowie die Intensität der Nutzung werden protokolliert und ausgewertet. Dabei lässt das häufige Aufrufen des Hilfemenüs ohne ein in die Tiefe der Menüstruktur gehen in Zusammenschau mit den anderen genannten Indikatoren darauf schließen, dass die Bedienperson 24 eher unzufriedenen ist oder sich langweilt. Die Steuer- und Regeleinrichtung 23 reagiert auf diese detektierte Grundgemütsverfassung durch einen Wechsel in einen Betriebsmodus, in welchem die Bedienperson 24 stärker in den Steuerungsprozess der Arbeitsmaschine eingebunden wird. Dies erfolgt durch eine gezielte natürlichsprachliche Interaktion mit der Bedienperson 24, in der diesem Fragen nach einem möglichen Verbesserungspotential gestellt werden. Beispielsweise können an die Bedienperson 24 Fragen hinsichtlich der anzeigbaren Informationsdichte oder der Reaktionsgeschwindigkeit der Steuer- und Regeleinrichtung 23 gestellt werden, welche die Bedienperson 24 entsprechend beantworten kann. Weiterhin ist bei diesem Betriebsmodus vorgesehen, Warnmeldungen früher aufzuzeigen, als es einer Standardeinstellung entspricht. Zudem werden Warnmeldungen, die von der Steuer- und Regeleinrichtung 23 generiert werden, detaillierter ausgeführt, wodurch sich der Bedienperson 24 einfacher und schneller ein mögliches Problem erschließen soll. Seitens der Arbeitsmaschine 1 sind als gemäß dem ausgewählten Betriebsmodus vorgesehene Reaktionen das Einstellen oder das Beibehalten von Standardwerten bezüglich der Reaktionszeiten auf Einstellungen sowie von Regelparametern zur Optimierung der Arbeitsorgane 20.

Auf eine Grundgemütsverfassung, die auf eine eher ausgeglichene und zufriedene oder motivierte Bedienperson 24 hinweist, wird geschlossen, wenn die Reaktionen der Bedienperson 24 auf Anforderungen durch das Steuer- und Regeleinrichtung 23 als zeitnah erfolgend detektiert werden. Der von der Bedienperson 24 auf die Tasten 39 ausgeübte und durch die Drucksensoren 42 erfasste Tastendruck ist normal, dass heißt der erfasste Tastendruck entspricht einem definierbaren Standardwertebereich, der für einen normalen Tastendruck repräsentativ ist, und es wird keine Mehrfachbetätigung einer Taste 39 durch die Steuer- und Regeleinrichtung 23 erfasst. Die Reaktion auf Anforderungen seitens der Steuer- und Regeleinrichtung 23 oder des Fahrerassistenzsystems 35 erfolgen innerhalb eines als zeitnah oder als schnell definierten Zeitintervalles und auch die Zeitdauer der Betätigung einer der Tasten 39 ist kürzer. Darüber hinaus nutzt die Bedienperson 24 die Hilfefunktionen intensiver, geht stärker in die Tiefe, um mehr Informationen zu erhalten. Als Reaktion auf diesen detektierten Grundgemütszustand wird ein Betriebsmodus eingestellt, der der Bedienperson 24 zyklisch zusätzliche Informationen über die Prozesse und deren Verbesserungspotential anbietet, um die Bedienperson 24 zu ermutigen, andere Einstellungen anzuwenden, die zu einer Verbesserung des Arbeitsergebnisses führen können. Der Bedienperson 24 wird auch die Möglichkeit eingeräumt, selbständig über die Informationsdichte zu entscheiden. In dem gewählten Betriebsmodus wird die Arbeitsmaschine 1 als Reaktion auf den detektierten Grundgemütszustand, der auf eine ausgeglichene und zufriedene oder motivierte Bedienperson 24 hinweist, entsprechend betrieben. Die Änderung von Einstellparametern erfolgt in normal großen Intervallen, wobei eine optimale Reaktionszeit angewandt wird, dass heißt eine Reaktionszeit, die den Einschwingvorgang nach einer Änderung eines Einstellparameters ausreichend berücksichtigt. Die Regelparameter zur Optimierung der Arbeitsorgane 20 werden so eingestellt, dass eine optimale Leistung beziehungsweise Wirtschaftlichkeit des Betriebes der Arbeitsmaschine 1 unter den aktuell herrschenden Betriebsbedingungen erreicht wird. In dem Fall einer als motiviert eingestuften Bedienperson 24 kann im Gegensatz zu einer als unsicher agierend eingestuften Bedienperson 24 der Grad der von der Arbeitsmaschine automatisch durchgeführten Handlungen reduziert werden, um die Motivation durch ein verstärktes Einbinden der Bedienperson in den Bedienungsablauf, auch bei kritischen Betriebssituationen, zu erhalten.

Die Auswahl eines Betriebsmodus in Abhängigkeit von der detektierten Grundgemütsverfassung hat zum Ziel, negative Auswirkungen auf den Betrieb und die Effizienz der Arbeitsmaschine 1 zu vermeiden. Erreicht werden soll dies dadurch, dass im Zuge einer Interaktion der Bedienperson 24 mit der Arbeitsmaschine 1 Informationen von der Steuer- und Regeleinrichtung 23 erfasst und ausgewertet werden, die aus dem Bedienverhalten der Bedienperson 24 resultieren, um in Abhängigkeit hiervon einen Betriebsmodus der Arbeitsmaschine 1 sowie der Steuer- und Regeleinrichtung 23 auszuwählen, die an die Grundgemütsverfassung und das daraus resultierende Bedienverhalten der Bedienperson 24 angepasst ist.

Ergänzend zu einer Erfassung der weiter oben genannten sensorisch erfassbaren Größen, wie Druck, Beschleunigung, Feuchtigkeit, Temperatur, Zeit oder Wiederholfrequenz, kann auch eine direkte Ansprache der Bedienperson 24 durch das Fahrerassistenzsystem 35 erfolgen, um durch gezielte Fragen die auf Grund der sensorisch erfassten Größen abgeleitete Einschätzung der Grundgemütsverfassung der Bedienperson 24 zu bestätigen.

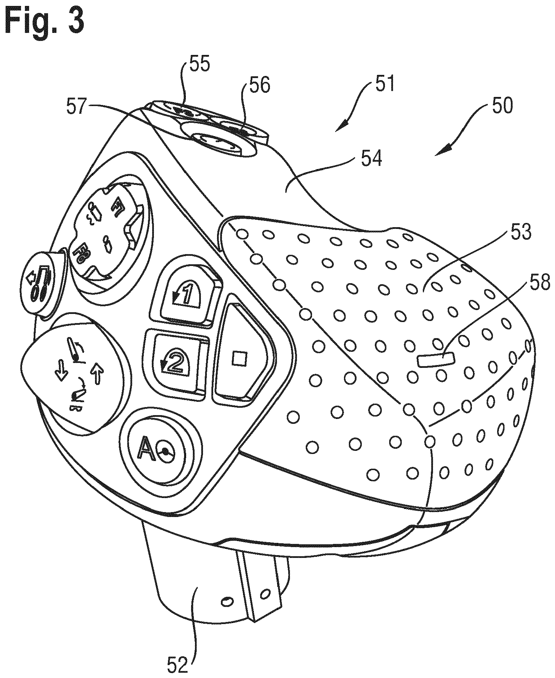

In Fig. 3 ist eine perspektivische Ansicht eines Griffkopfes 51 eines Multifunktionsgriffes 50 dargestellt, der der Steuerung der Arbeitsmaschine 1 durch die Bedienperson 24 dient. An die Unterseite des Griffkopfs 51 ist ein hohler Stutzen 52 angeformt, der vorgesehen ist, um einen in Fig. 3 nicht gezeigten Schaft des Multifunktionsgriffs 50 aufzunehmen, der den Griffkopf 51 mit einem Gelenk im Armaturenbrett verbindet. Der Griffkopf 51 ist unregelmäßig geformt, so dass einzelne Seiten nicht scharf gegeneinander abgegrenzt sind, sondern an mehr oder weniger stark abgerundeten Kanten kontinuierlich ineinander übergehen. Dennoch ist eine dem Stutzen 52 in etwa entgegengesetzte Oberseite als eine relativ schwach gekrümmte zusammenhängende Fläche identifizierbar, die in ihrem dem Fahrer zugewandten Bereich eine Auflagefläche 53 in dem Handteller eines Fahrers angepasster Form und Größe sowie in Fahrtrichtung daran angrenzend ein Bedienfeld 54 umfasst. Die Auflagefläche 53 ist in Fig. 3 erkennbar an darauf verteilten kleinen Vertiefungen. Wie in Fig. 3 weiter dargestellt ist, sind an dem Bedienfeld 54 drei Bedienelemente 55, 56, 57 vorgesehen. Die Bedienelemente 55, 56 können beispielsweise zur Einstellung einer Soll-Geschwindigkeit einer Tempomatfunktion der Arbeitsmaschine 1 dienen. Im Gegensatz dazu wird bei inaktiver Tempomatfunktion die Fahrgeschwindigkeit der Arbeitsmaschine 1 durch Verschieben des gesamten Griffs in oder entgegen der Fahrtrichtung gesteuert. Die Interaktion der Bedienperson 24 mit dem Multifunktionsgriff 50 lässt sich in vergleichbarer Weise erfassen und auswerten, wie dies bei der Interaktion der Bedienperson mit der Eingabeeinheit 22a der Fall ist. Auch hier lassen sich durch geeignete Sensoren, wie Leitwertsensoren oder Drucksensoren, beispielsweise die Beschleunigung des Multifunktionsgriffes 50 bei dessen Betätigung zur Regelung der Fahrgeschwindigkeit erfassen. Ebenso lässt die Auflagefläche 53 eine Messung der Feuchtigkeit durch einen darauf angeordneten Leitwertsensor zu. Der Multifunktionsgriff 50 bietet zudem die Möglichkeit der Temperaturmessung durch einen Temperatursensor 58 wie einen Heißleiter, welcher im Griffkopf 51 angeordnet sein kann. Hierdurch lässt sich eine von mehreren physischen Größen der Bedienperson 24 erfassen, aus denen Informationen über den emotionalen Zustand der Bedienperson 24 ableitbar sind.

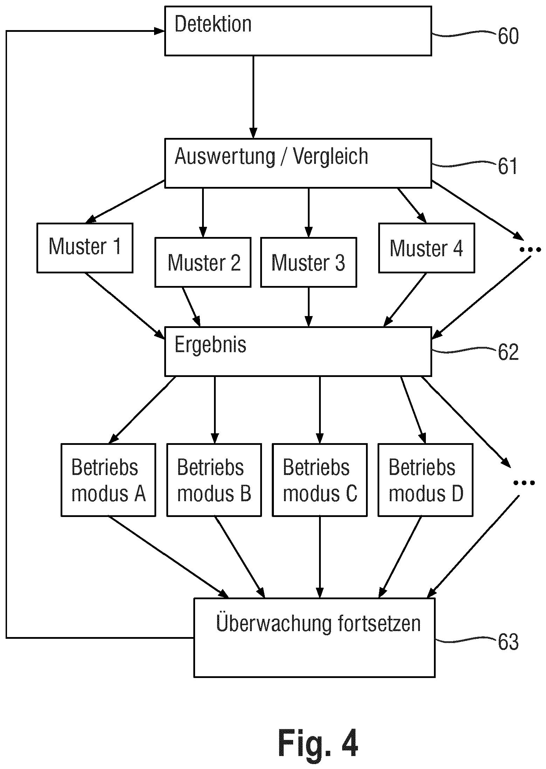

In Fig. 4 ist ein Flussdiagramm dargestellt, anhand dessen der Ablauf zur Erfassung und Auswertung des Bedienverhaltens beziehungsweise hieraus abgeleitet die Grundgemütsverfassung sowie die daraufhin eingeleiteten Maßnahmen erläutert werden. In einem ersten Schritt 60 wird das Bedienverhalten der Bedienperson 24 detektiert. Dies kann bereits unmittelbar nach Inbetriebnahme der Arbeitsmaschine 1 geschehen oder erst zu einem späteren Zeitpunkt, beispielsweise wenn die Arbeitsmaschine 1 über einen vorgebbaren Zeitraum hinweg in Betrieb gewesen ist. Die Detektion des Bedienverhaltens erfolgt auf der Basis der Erfassung zumindest einer der verschiedenen Messgrößen, die weiter oben bereits nicht abschließend aufgezählt wurden.

In einem zweiten Schritt 61 erfolgt die Auswertung der erfassten Messgrößen durch einen Soll-Istwert-Vergleich mit in der Steuer- und Regeleinrichtung 23 hinterlegten Standardwertebereichen als Sollwertintervalle für die sensorisch erfassbaren Größen. Die jeweiligen Sollwertintervalle repräsentieren unterschiedliche Bedienverhalten, die verschiedenen Grundgemütsverfassungen zugeordnet werden. Hierzu sind verschiedene Muster M1, M2, M3, ... hinterlegt, die jeweils einem möglichen emotionalen Zustand der Bedienperson entsprechen. Die Bestimmung der Grundgemütsverfassung erfolgt dabei auf der Basis zumindest einer Interaktion mit der Arbeitsmaschine 1 und/oder dem Fahrerassistenzsystem 35. Zusätzlich kann in diesem zweiten Schritt die Auswertung verifiziert werden, indem der Bedienperson 24 gezielt Fragen gestellt werden, die durch eine auf der Anzeigeeinheit 22 dargestellte Auswahl an möglichen Aussagen von der Bedienperson 24 beantwortet werden können. Alternativ zu einer Anzeige von Fragen und Antworten auf der Anzeigeeinheit 22 lässt sich eine entsprechende Kommunikation durch eine Sprachausgabe und eine Spracherkennung realisieren.

Das Ergebnis der Auswertung führt in einem dritten Schritt 62 dazu, dass in Abhängigkeit von der in dem zweiten Schritt 61 bestimmten Grundgemütsverfassung ein Betriebsmodus aus einer Anzahl mehrerer Betriebsmodi A, B, C, D,... ausgewählt wird, gemäß dem die Arbeitsmaschine 1 und das Fahrerassistenzsystem 35 zumindest temporär betrieben werden.

Nachdem der Betriebsmodus festgelegt wurde wird in einem vierten Schritt 63 die sensorische Erfassung gemäß dem ersten Schritt 60 fortgesetzt, um im Fall einer signifikanten Veränderung von Messwerten erneut eine Auswertung gemäß dem zweiten Schritt 61 durchzuführen. Die Fortsetzung der sensorischen Erfassung sowie der Auswertung der Messwerte kann sich wiederholend in vorgebaren zeitlichen Intervallen erfolgen. Hierdurch soll vermieden werden, dass ein häufiger Betriebsmoduswechsel stattfindet, wenn sich ändernde Grundgemütsverfassungen in kürzeren Abständen aufeinander folgend bestimmt werden. Jedoch soll auch verifiziert werden, ob das ausgewählte Muster M1, M2, M3, .., welches für einen spezifischen emotionalen Zustand charakteristisch ist, diesen tatsächlich beschreibt. Führt der anhand eines Musters M1, M2, M3, ... ausgewählte Betriebsmodus A, B, C, D, ... nicht zu dem gewünschten Resultat, so kann ein anderes Muster M1, M2, M3, ... ausgewählt werden, welches von dem zuvor ausgewählten geringfügig abweicht. Entsprechend dieser veränderten Musterauswahl kann sich auch der auszuwählende Betriebsmodus A, B, C, D, ... ändern.

Vorzugsweise erfolgt jedoch eine Erfassung und Auswertung stets nach einer Betriebsunterbrechung, die unterschiedliche Ursachen haben kann. Insbesondere eine außerplanmäßige Unterbrechung des Betriebes der Arbeitsmaschine 1 in Folge einer Wartungsarbeit oder dergleichen führt oftmals zu einer signifikanten, sich negativ auswirkenden Änderung der Grundgemütsverfassung der Bedienperson 24. Hingegen können planmäßige Unterbrechungen, wie beispielsweise eine Pause oder die Fahrt von einem zu bearbeitenden Feld zu einem anderen Feld sich positiv auf die Grundgemütsverfassung auswirken.

**Bezugszeichenliste**

| | | | |
|---|---|---|---|
| **1** | Arbeitsmaschine | **31** | Ausgangssignal |
| **2** | Mähdrescher | **32** | Anzeigesteuersignal |
| **3** | Getreideschneidwerk | **33** | Arbeitsorgansteuersignal |
| **4** | Schrägförderer | **34** | Arbeitsparameter |
| **5** | Erntegutstrom | **35** | Fahrerassistenzsystem |
| **6** | Dreschkorb | **36** | Anzeigebereich |
| **7** | Dreschorgane | **37** | Hinweisfeld |
| **8** | Umlenktrommel | **38** | Auswahlfeld |
| **9** | Hordenschüttler | **39** | Taste |
| **10** | Trenneinrichtung | **40** | Navigationsknopf |
| **11** | Körner | **41** | Touchscreen-Monitor |
| **12** | Rücklaufboden | **42** | Drucksensor |
| **13** | Zuführboden | **42a** | Beschleunigungssensor |
| **14** | Siebebene | **42b** | Feuchtigkeitssensor |
| **15** | Siebebene | **43** | Eingangssignal |
| **16** | Gebläse | **44** | Softwaremodul |
| **17** | Reinigungseinrichtung | **45** | Softwaremodul |
| **18** | Elevator | **50** | Multifunktionsgriff |
| **19** | Korntank 19 | **51** | Griffkopf |
| **20** | Arbeitsorgane | **52** | Stutzen |
| **21** | Fahrerkabine | **53** | Auflagefläche |
| **22** | Anzeigeeinheit | **54** | Bedienfeld |
| **22a** | Eingabeeinheit | **55** | Bedienelement |
| **23** | Steuer- und Regeleinrichtung | **56** | Bedienelement |
| **24** | Bedienperson | **57** | Bedienelement |
| **25** | Bussystem | **58** | Temperatursensor |
| **26** | Sensorsystem | **60** | Erster Schritt |
| **27** | Recheneinheit | **61** | Zweiter Schritt |
| **28** | Information | **62** | Dritter Schritt |
| **29** | externe Information | **63** | Vierter Schritt |
| **30** | hinterlegte Information | | |

## Patentansprüche

1. Verfahren zum Betreiben einer eine Vielzahl von Arbeitsaggregaten (20) aufweisenden landwirtschaftlichen Arbeitsmaschine (1, 2), die zur Steuerung und/oder Regelung der Arbeitsaggregate (20) eine Steuer- und Regelungseinrichtung (23) mit einer Anzeigeeinheit (22) sowie zumindest einer Schnittstelle (22, 22a) zur Kommunikation umfasst,
- dass der emotionale Zustand einer Bedienperson (24) während einer Interaktion über die zumindest eine Schnittstelle mit der Arbeitsmaschine (1, 2) erkannt wird, **dadurch gekennzeichnet, dass**
- dass die Betriebsweise der Arbeitsmaschine (1, 2) an den emotionalen Zustand der Bedienperson (24) in der Weise angepasst wird, dass sich die Arbeitsmaschine in ihrem Prozessverhalten und ihrer Kommunikation mit der Bedienperson auf deren emotionalen Zustand einstellt und wobei eine Interaktion einer Bedienperson (24) mit der Steuer- und Regelungseinrichtung (23) durch diese ausgewertet wird, um auf den emotionalen Zustand einer Bedienperson (24) rückzuschließen, und dass in Abhängigkeit von dem Ergebnis der Auswertung ein Betriebsmodus aus einer Auswahl von zumindest zwei Betriebsmodi der Steuer- und Regelungseinrichtung (23) aktiviert wird, wobei der ausgewählte Betriebsmodus die Kommunikation sowie das Handling der Steuer- und Regelungseinrichtung an den emotionalen Zustand einer Bedienerperson (24) in der Weise anpasst, dass die Gefahr einer Fehlbedienung oder eine ineffiziente Arbeitsweise der landwirtschaftlichen Arbeitsmaschine reduziert wird

2. Verfahren nach Anspruch 1, **dadurch gekennzeichnet, dass** der emotionale Zustand einer Bedienperson (24), der erkannt wird, ein Komplex an Eigenschaften ist, durch welche die Kommunikation mit der Schnittstelle (22, 22a) zu der Arbeitsmaschine (1, 2) beeinflusst wird.

3. Verfahren nach einem der Ansprüche 1 bis 2, **dadurch gekennzeichnet, dass** bei einer Interaktion der Bedienperson (24) mit der Schnittstelle (22, 22a) zur Kommunikation deren Handhabung detektiert wird.

4. Verfahren nach einem der Ansprüche 1 bis 3, **dadurch gekennzeichnet, dass** zur Erkennung der Handhabung eine mechanische Einwirkung auf Mittel zur Dateneingabe (22a) detektiert wird.

5. Verfahren nach Anspruch 4, **dadurch gekennzeichnet, dass** zur Erkennung der Handhabung eine Leitwertmessung an den Mitteln zur Dateneingabe (22a) durchgeführt wird.

6. Verfahren nach einem der Ansprüche 3 bis 5, **dadurch gekennzeichnet, dass** zur Erkennung der Handhabung die Reaktionszeit auf eine Eingabeaufforderung erfasst wird.

7. Verfahren nach einem der Ansprüche 3 bis 6, **dadurch gekennzeichnet, dass** zur Erkennung der Handhabung die Betätigungsdauer der Mittel zur Dateneingabe (22a) erfasst wird.

8. Verfahren nach einem der Ansprüche 3 bis 7, **dadurch gekennzeichnet, dass** zur Erkennung der Handhabung die Wiederholfrequenz einer Betätigung der Mittel zur Dateneingabe (22a) erfasst wird.

9. Verfahren nach einem der Ansprüche 1 bis 8, **dadurch gekennzeichnet, dass** eine gezielte Ansprache der Bedienperson hinsichtlich ihres emotionalen Zustandes durch die Steuer- und Regelungseinrichtung durchgeführt wird.

10. Verfahren nach einem der Ansprüche 1 bis 9, **dadurch gekennzeichnet, dass** das Verfahren bei jeder Inbetriebnahme der Arbeitsmaschine (1, 2) durchgeführt wird.

11. Verfahren nach einem der Ansprüche 1 bis 9, **dadurch gekennzeichnet, dass** das Verfahren erstmalig nach einer vorgebbaren Betriebsdauer der Arbeitsmaschine (1, 2) durchgeführt wird.

12. Verfahren nach einem der Ansprüche 1 bis 11, **dadurch gekennzeichnet, dass** das Verfahren in zeitlich vorgebbaren Intervallen sich wiederholend durchgeführt wird.

13. Landwirtschaftliche Arbeitsmaschine (1, 2) zur Durchführung des Verfahrens nach einem der Ansprüche 1 bis 13, mit einer Vielzahl von Arbeitsaggregaten (20) sowie einer Steuer- und Regelungseinrichtung zur Steuerung und oder Regelung der Arbeitsaggregate (20), wobei die Steuer- und Regelungseinrichtung (23) eine Anzeigeeinheit (22) sowie eine Schnittstelle (22, 22a) zur Kommunikation aufweist,
- dass die Steuer- und Regelungseinrichtung (23) dazu eingerichtet ist, den emotionalen Zustand einer Bedienperson (24) während einer Interaktion über die zumindest eine Schnittstelle (22, 22a) mit der Arbeitsmaschine (1, 2) zu erkennen, **dadurch gekennzeichnet, dass**
- dass die Steuer- und Regelungseinrichtung (23) dazu eingerichtet ist, die Betriebsweise der Arbeitsmaschine (1, 2) an den emotionalen Zustand der Bedienperson (24) in der Weise anzupassen, dass sich die Arbeitsmaschine in ihrem Prozessverhalten und ihrer Kommunikation mit der Bedienperson auf deren emotionalen Zustand einstellt und wobei eine Interaktion einer Bedienperson (24) mit der Steuer- und Regelungseinrichtung (23) durch diese ausgewertet wird, um auf den emotionalen Zustand einer Bedienperson (24) rückzuschließen, und dass in Abhängigkeit von dem Ergebnis der Auswertung ein Betriebsmodus aus einer Auswahl von zumindest zwei Betriebsmodi der Steuer- und Regelungseinrichtung (23) aktiviert wird, wobei der ausgewählte Betriebsmodus die Kommunikation sowie das Handling der Steuer- und Regelungseinrichtung an den emotionalen Zustand einer Bedienerperson (24) in der Weise anpasst, dass die Gefahr einer Fehlbedienung oder eine ineffiziente Arbeitsweise der landwirtschaftlichen Arbeitsmaschine reduziert wird

14. Landwirtschaftliche Arbeitsmaschine (1, 2) nach Anspruch 13, **dadurch gekennzeichnet, dass** zumindest eine physische Interaktion einer Bedienperson (24) mit der Steuer- und Regelungseinrichtung (23) durch diese auszuwerten und in Abhängigkeit von der Auswertung einen Betriebsmodus aus einer Auswahl von zumindest zwei Betriebsmodi der Steuer- und Regelungseinrichtung (23) zu aktivieren.

15. Landwirtschaftliche Arbeitsmaschine (1, 2) nach einem der Ansprüche 13 oder 14, **dadurch gekennzeichnet, dass** die Steuer- und Regelungseinrichtung (23) eine Auswerteeinheit (44, 45) umfasst, die mit zumindest einem Sensor (42) verbunden ist, der zur Erfassung einer Messgröße eingerichtet ist, die auf ein Bedienverhalten einer Bedienperson (24) rückschließen lässt.

16. Landwirtschaftliche Arbeitsmaschine (1, 2) nach Anspruch 15, **dadurch gekennzeichnet, dass** die Steuer- und Regelungseinrichtung (23) dazu eingerichtet ist, die von dem mindestens einen Sensor (42) bereitgestellten Daten auszuwerten, und anhand dieser Auswertung zu entscheiden, welcher Betriebsmodus dem aktuell bestimmten Bedienverhalten entspricht.

17. Landwirtschaftliche Arbeitsmaschine (1, 2) nach einem der Ansprüche 13 bis 16, **dadurch gekennzeichnet, dass** der Sensor zur Erfassung mechanischer Signale eingerichtet ist.

18. Landwirtschaftliche Arbeitsmaschine (1, 2) nach einem der Ansprüche 13 bis 17, **dadurch gekennzeichnet, dass** der Sensor zur Erfassung elektrischer oder thermischer Signale eingerichtet ist.

19. Landwirtschaftliche Arbeitsmaschine (1, 2) nach einem der Ansprüche 13 bis 18, **dadurch gekennzeichnet, dass** die Steuer- und Regelungseinrichtung (23) zur Erfassung, Dokumentation und Auswertung des Benutzerverhaltens eingerichtet ist.

20. Landwirtschaftliche Arbeitsmaschine (1, 2) nach einem der Ansprüche 13 bis 19, **dadurch gekennzeichnet, dass** die Steuer- und Regelungseinrichtung (23) dazu eingerichtet ist, die Auswertung in einstellbaren zeitlichen Intervallen durchzuführen.

21. Landwirtschaftliche Arbeitsmaschine (1, 2) nach einem der Anspruch 13 bis 20, **dadurch gekennzeichnet, dass** die Steuer- und Regelungseinrichtung (23) durch einen Eingriff der Bedienperson (24) übersteuerbar ist, um die Erkennung abzuschalten.

## Claims

1. A method of operating an agricultural working machine (1, 2) which has a plurality of working assemblies (20) and which for open-loop and/or closed-loop control of the working assemblies (20) includes an open-loop and closed-loop control device (23) having a display unit (22) and at least one interface (22, 22a) for communication,
- the emotional state of an operator (24) is recognised during an interaction by way of the at least one interface with the working machine (1, 2),
**characterised in that**
- the operating mode of the working machine (1, 2) is adapted to the emotional state of the operator (24) in such a way that the working machine is adjusted in its process performance and its communication with the operator to the emotional state of the operator and wherein an interaction of an operator (24) with the open-loop and closed-loop control device (23) is evaluated thereby in order to deduce the emotional state of the operator (24) and that in dependence on the result of the evaluation an operating mode is activated from a selection of at least two operating modes of the open-loop and closed-loop control device (23), wherein the selected operating mode adapts the communication and the handling of the open-loop and closed-loop control device to the emotional state of an operator (24) in such a way that the risk of an operating error or an inefficient mode of operation of the agricultural working machine is reduced.

2. A method according to claim 1 **characterised in that** the emotional state of an operator (24) which is recognised is a complex of properties by which the communication with the interface (22, 22a) to the working machine (1, 2) is influenced.

3. A method according to one of claims 1 and 2 **characterised in that** upon an interaction of the operator (24) with the interface (22, 22a) for communication the handling thereof is detected.

4. A method according to one of claims 1 to 3 **characterised in that** to recognise the handling a mechanical action on means for data input (22a) is detected.

5. A method according to claim 4 **characterised in that** to recognise the handling a conductivity measurement operation is carried out at the means for data input (22a).

6. A method according to one of claims 3 to 5 **characterised in that** to recognise the handling the reaction time to an input request is detected.

7. A method according to one of claims 3 to 6 **characterised in that** to recognise the handling the actuation duration of the means for data input (22a) is detected.

8. A method according to one of claims 3 to 7 **characterised in that** to recognise the handling the repetition frequency of an actuation of the means for data input (22a) is detected.

9. A method according to one of claims 1 to 8 **characterised in that** a targetted address to the operator in respect of the emotional state thereof is carried out by the open-loop and closed-loop control device.

10. A method according to one of claims 1 to 9 **characterised in that** the method is carried out each time the working machine (1, 2) is started.

11. A method according to one of claims 1 to 9 **characterised in that** the method is carried out for the first time after a predeterminable operating duration of the working machine (1, 2).

12. A method according to one of claims 1 to 11 **characterised in that** the method is carried out repetitively at predeterminable time intervals.

13. An agricultural working machine (1, 2) for carrying out the method according to one of claims 1 to 12 comprising a plurality of working assemblies (20) and an open-loop and closed-loop control device for open-loop and/or closed-loop control of the working assemblies (20) wherein the open-loop and closed-loop control device (23) has a display unit (22) and an interface (22, 22a) for communication,
- the open-loop and closed-loop control device (23) is adapted to recognise the emotional state of an operator (24) during an interaction by way of the at least one interface (22, 22a) with the working machine (1, 2),
**characterised in that**
- the open-loop and closed-loop control device (23) is adapted to adapt the operating mode of the working machine (1, 2) to the emotional state of the operator (24) in such a way that the working machine is adjusted in its process performance and its communication with the operator to the emotional state of the operator and wherein an interaction of an operator (24) with the open-loop and closed-loop control device (23) is evaluated thereby in order to deduce the emotional state of the operator (24) and that in dependence on the result of the evaluation an operating mode is activated from a selection of at least two operating modes of the open-loop and closed-loop control device (23), wherein the selected operating mode adapts the communication and the handling of the open-loop and closed-loop control device to the emotional state of an operator (24) in such a way that the risk of an operating error or an inefficient mode of operation of the agricultural working machine is reduced.

14. An agricultural working machine (1, 2) according to claim 13 **characterised in that** at least one physical interaction of an operator (24) with the open-loop and closed-loop control device (23) is to be evaluated thereby and in dependence on the evaluation an operating mode is to be activated from a selection of at least two operating modes of the open-loop and closed-loop control device (23).

15. An agricultural working machine (1, 2) according to one of claims 13 and 14 **characterised in that** the open-loop and closed-loop control device (23) includes an evaluation unit (44, 45) connected to at least one sensor (42) adapted to detect a measurement value which allows an operating behaviour of an operator (24) to be deduced.

16. An agricultural working machine (1, 2) according to claim 15 **characterised in that** the open-loop and closed-loop control device (23) is adapted to evaluate the data provided by the at least one sensor (42) and on the basis of said evaluation to decide which operating mode corresponds to the currently determined operating behaviour.

17. An agricultural working machine (1, 2) according to one of claims 13 to 16 **characterised in that** the sensor is adapted to detect mechanical signals.

18. An agricultural working machine (1, 2) according to one of claims 13 to 17 **characterised in that** the sensor is adapted to detect electrical or thermal signals.

19. An agricultural working machine (1, 2) according to one of claims 13 to 18 **characterised in that** the open-loop and closed-loop control device (23) is adapted to detect, document and evaluate the operating behaviour.

20. An agricultural working machine (1, 2) according to one of claims 13 to 19 **characterised in that** the open-loop and closed-loop control device (23) is adapted to carry out the evaluation at adjustable time intervals.

21. An agricultural working machine (1, 2) according to one of claims 13 to 20 **characterised in that** the open-loop and closed-loop control device (23) can be overridden by an intervention from the operator (24) to shut down recognition.

## Revendications

1. Procédé d'exploitation d'une machine de travail agricole (1, 2) qui comporte une pluralité d'organes de travail (20) et qui, pour commander et/ou réguler les organes de travail (20), comprend un équipement de commande et de régulation (23) avec une unité d'affichage (22) ainsi qu'au moins une interface (22, 22a) de communication, l'état émotionnel d'un opérateur (24) étant détecté pendant une interaction par l'intermédiaire de la au moins une interface avec la machine de travail (1, 2), **caractérisé en ce que** le mode d'exploitation de la machine de travail (1, 2) est adapté à l'état émotionnel de l'opérateur (24), de façon que, dans son comportement de processus et dans sa communication avec l'opérateur, la machine de travail se règle sur l'état émotionnel de celui-ci, et une interaction d'un opérateur (24) avec l'équipement de commande et de régulation (23) étant analysée par celui-ci afin d'en déduire l'état émotionnel d'un opérateur (24), et **en ce que**, en fonction du résultat de l'analyse, un mode d'exploitation est activé à partir d'une sélection d'au moins deux modes d'exploitation de l'équipement de commande et de régulation (23), le mode d'exploitation sélectionné adaptant la communication ainsi que le maniement de l'équipement de commande et de régulation à l'état émotionnel d'un opérateur (24), de façon à réduire le risque de fausse manoeuvre ou de mode d'exploitation inefficace de la machine de travail agricole.

2. Procédé selon la revendication 1, **caractérisé en ce que** l'état émotionnel détecté d'un opérateur (24) est un ensemble de propriétés qui influent sur la communication avec l'interface (22, 22a) avec la machine de travail (1, 2).

3. Procédé selon une des revendications 1 à 2, **caractérisé en ce que**, en cas d'interaction de l'opérateur (24) avec l'interface (22, 22a) de communication, la manipulation de celle-ci est détectée.

4. Procédé selon une des revendications 1 à 3, **caractérisé en ce que**, pour détecter la manipulation, une action mécanique sur des moyens de saisie de données (22a) est détectée.

5. Procédé selon la revendication 4, **caractérisé en ce que**, pour détecter la manipulation, une mesure de conductance est effectuée sur les moyens d'entrée de données (22a).

6. Procédé selon une des revendications 3 à 5, **caractérisé en ce que**, pour détecter la manipulation, le temps de réaction à une invite de saisie est mesuré.

7. Procédé selon une des revendications 3 à 6, **caractérisé en ce que**, pour détecter la manipulation, la durée d'actionnement des moyens de saisie de données (22a) est mesurée.

8. Procédé selon une des revendications 3 à 7, **caractérisé en ce que**, pour détecter la manipulation, la fréquence de répétition d'un actionnement des moyens de saisie de données (22a) est mesurée.

9. Procédé selon une des revendications 1 à 8, **caractérisé en ce qu'**une interpellation ciblée de l'opérateur au sujet de son état émotionnel est effectuée par l'équipement de commande et de régulation.

10. Procédé selon une des revendications 1 à 9, **caractérisé en ce que** le procédé est exécuté à chaque mise en marche de la machine de travail (1, 2).

11. Procédé selon une des revendications 1 à 9, **caractérisé en ce que** le procédé est exécuté pour la première fois après une durée prescriptible d'exploitation de la machine de travail (1, 2).

12. Procédé selon une des revendications 1 à 11, **caractérisé en ce que** le procédé est exécuté de manière répétée à des intervalles prescriptibles dans le temps.

13. Machine de travail agricole (1, 2) pour exécuter le procédé selon une des revendications 1 à 13, comprenant une pluralité d'organes de travail (20) ainsi qu'un équipement de commande et de régulation pour commander et ou réguler les organes de travail (20), l'équipement de commande et de régulation (23) comportant une unité d'affichage (22) ainsi qu'une interface (22, 22a) de communication, l'équipement de commande et de régulation (23) étant conçu pour détecter l'état émotionnel d'un opérateur (24) pendant une interaction par l'intermédiaire de la au moins une interface (22, 22a) avec la machine de travail (1, 2), **caractérisée en ce que** l'équipement de commande et de régulation (23) est conçu pour adapter le mode d'exploitation de la machine de travail (1, 2) à l'état émotionnel de l'opérateur (24), de façon que, dans son comportement de processus et dans sa communication avec l'opérateur, la machine de travail se règle sur l'état émotionnel de celui-ci, et une interaction d'un opérateur (24) avec l'équipement de commande et de régulation (23) étant analysée par celui-ci afin d'en déduire l'état émotionnel d'un opérateur (24), et **en ce que**, en fonction du résultat de l'analyse, un mode d'exploitation est activé à partir d'une sélection d'au moins deux modes d'exploitation de l'équipement de commande et de régulation (23), le mode d'exploitation sélectionné adaptant la communication ainsi que le maniement de l'équipement de commande et de régulation à l'état émotionnel d'un opérateur (24), de façon à réduire le risque de fausse manoeuvre ou de mode d'exploitation inefficace de la machine de travail agricole.

14. Machine de travail agricole (1, 2) selon la revendication 13, **caractérisée en ce qu'**au moins une interaction physique d'un opérateur (24) avec l'équipement de commande et de régulation (23) est analysée par celui-ci et, en fonction de l'analyse, un mode d'exploitation est activé à partir d'une sélection d'au moins deux modes d'exploitation de l'équipement de commande et de régulation (23).

15. Machine de travail agricole (1, 2) selon une des revendications 13 ou 14, **caractérisée en ce que** l'équipement de commande et de régulation (23) comporte une unité d'analyse (44, 45) qui est reliée à au moins un capteur (42) qui est conçu pour déterminer une grandeur mesurée, laquelle permet de déduire un comportement opératoire d'un opérateur (24).

16. Machine de travail agricole (1, 2) selon la revendication 15, **caractérisée en ce que** l'équipement de commande et de régulation (23) est conçu pour analyser les données fournies par le au moins un capteur (42) et, sur la base de cette analyse, pour décider quel mode d'exploitation correspond au comportement opératoire déterminé à cet instant.

17. Machine de travail agricole (1, 2) selon une des revendications 13 à 16, **caractérisée en ce que** le capteur est conçu pour enregistrer des signaux mécaniques.

18. Machine de travail agricole (1, 2) selon une des revendications 13 à 17, **caractérisée en ce que** le capteur est conçu pour enregistrer des signaux électriques ou thermiques.

19. Machine de travail agricole (1, 2) selon une des revendications 13 à 18, **caractérisée en ce que** l'équipement de commande et de régulation (23) est conçu pour enregistrer, documenter et analyser le comportement de l'utilisateur.

20. Machine de travail agricole (1, 2) selon une des revendications 13 à 19, **caractérisée en ce que** l'équipement de commande et de régulation (23) est conçu pour réaliser l'analyse à des intervalles temporels réglables.

21. Machine de travail agricole (1, 2) selon une des revendications 13 à 20, **caractérisée en ce que** l'équipement de commande et de régulation (23) peut être neutralisé par une intervention de l'opérateur (24) afin de désactiver l'enregistrement.
